# EUROPEAN PATENT SPECIFICATION

(11) **EP 3 135 880 B1**
(45) Date of publication and mention of the grant of the patent: **08.07.2020**
(21) Application number: 15182259.0
(22) Date of filing: 25.08.2015
(51) Int. Cl.: F02C 3/20, F02C 9/40, F23R 3/34

(54) **GAS TURBINE WITH A SEQUENTIAL COMBUSTION ARRANGEMENT AND FUEL COMPOSITION CONTROL**
GASTURBINE MIT SEQUENTIELLER VERBRENNUNGSANORDNUNG UND BRENNSTOFFZUSAMMENSETZUNGSSTEUERUNG
TURBINE À GAZ AVEC UN AGENCEMENT À COMBUSTION SÉQUENTIELLE ET CONTRÔLE DE COMPOSITION DE CARBURANT

(43) Date of publication of application: 01.03.2017
(73) Proprietor: Ansaldo Energia IP UK Limited, London W1G 9DQ (GB)
(72) Inventor: Knapp, Klaus, 5412 Gebenstorf (CH); Benz, Eribert, 5413 Birmenstorf (CH); Hoffmann, Jürgen, 5417 Untersiggenthal (CH)
(74) Representative: Bernotti, Andrea

(56) References cited:
- EP-A1- 2 767 699
- EP-A1- 2 835 516
- EP-A1- 2 857 658
- EP-A2- 1 655 456
- US-A1- 2005 126 178

## Description

### Technical field

The invention refers to a method for operating a gas turbine with a sequential combustor arrangement with fuel gas comprising higher hydrocarbons. The invention additionally refers to a gas turbine which is adapted to carry out such a method.

### Background of the disclosure

Due to increased power generation by unsteady renewable sources like wind or solar existing gas turbine based power plants are increasingly used to balance power demand and to stabilize the grid. Thus improved operational flexibility is required. This implies that gas turbines are often operated at lower load than the base load design point, i.e. at lower combustor inlet and firing temperatures. In addition fuel from different sources with different fuel gas composition is used depending on price and availability.

At the same time, emission limit values and overall emission permits are becoming more stringent, so that it is required to operate at lower emission values, keep low emissions also at part load operation, during transients, as these also count for cumulative emission limits, and for different fuel compositions.

To reduce emissions and to increase operational flexibility sequential combustion has been suggested. Depending on the operating conditions, fuel gas composition can have a large influence on the combustion stability and emission of a sequential combustor arrangement.

Documents EP 2767699 and EP2857658 disclose methods for operating gas turbines having a sequential combustor arrangement. However these solutions are not optimized in order to guarantee low emissions and safe operation at all the operating loads.

### Summary of the disclosure

One object of the present disclosure is to propose a method for operating a gas turbine comprising at least a compressor, a sequential combustor arrangement, and a turbine downstream of the sequential combustor arrangement. Each sequential combustor comprises a first burner, a first combustion chamber, and a second combustor arranged sequentially in a fluid flow connection.

According to a first embodiment of the method the inlet gas is compressed in the compressor, and a fuel gas supplied to the gas turbine is separated into a rich fuel and a lean fuel. A rich fuel is a fuel which has a concentration of higher hydrocarbons (also called C2+, i.e. hydrocarbons which comprise more carbon atoms per molecule than methan, i.e. 2 or more carbon atoms per molecule) which is higher than the concentration of higher hydrocarbons of the fuel gas supplied to the seperator. A lean fuel is a fuel which has a concentration of higher hydrocarbons which is lower than the concentration of higher hydrocarbons of the fuel gas supplied to the seperator.

The method further comprises feeding a first fuel to at least one first burner and feeding a second fuel to at least one second combustor. The first fuel is obtained from at least one of the rich fuel, the lean fuel, and the fuel gas supplied to the gas turbine. It can be a mixture of two or all three of those gases. The concentration of higher hydrocarbons in the first fuel differs from the concentration of higher hydrocarbons of the fuel gas. The second fuel is obtained from at least one of the rich fuel, the lean fuel, and the fuel gas. It can be a mixture of two or all three of those gases. The concentration of higher hydrocarbons in the second fuel differs from the concentration of higher hydrocarbons of the fuel gas and of the first fuel.

A fuel differs in the concentration of higher hydrocarbons from another fuel if the difference can be analysed by common analyzing technics such as for example gas chromatography. For practical reasons the difference can be for example grater than 1%, or greater than 5% in the concentration of high hydrocarbons. In order to have a big influence with a small amount of rich fuel the difference in the concentration of high hydrocarbons can be larger than 50% or even aproach 100%, i.e. the lean fuel consist close to 100% of methane and the rich fuel close to 100% of high hydrocarbons (C2+).

The first fuel is burned with the compressed gas in the first combustion chamber to obtain first combustion products. The second fuel is fed to at least one second combustor and burned with the first combustion products to obtain second combustion products. These are expanded in the turbine.

The fuel gas can be separated into rich fuel and lean fuel in a gas separation system. Such a gas separation system can for example be system based on an absorption process, a cryogenic separation process, a cryogenic heat exchanger process, a cryogenic expander process, or a progressive swing adsorption process.

The second fuel can for example be admitted to a second combustor which is part of a transition zone between the first combustor and the turbine for so called late lean combustion.

For low load operation of the gas turbine the first fuel which is fed to the first burner is provided with a concentration of higher hydrocarbons which is lower than the concentration of higher hydrocarbons of the fuel gas supplied to the gas turbine. The second fuel which is fed to the second combustor is provided with a concentration of higher hydrocarbons which is higher than the concentration of higher hydrocarbons of the fuel gas supplied to the gas turbine for stabilizing the combustion.

Low load operation is operation in a load range from idle or minimum load up to about 50% or up to 60% relative load. In the low load range power output is typically controlled by closing variable compressor inlet guide vanes to reduce the mass flow through the gas turbine and by reducing the hot gas temperature in the second combustor. A reduction of the hot gas temperature can lead to CO emissions, unburnet hydrocarbons and flame instabilities such as pulsations. These can be mitigated by increaseing the concentration of higher hydrocarbons because they reduce the ignition delay time compared to a combustion of methane. Thus, even at reduced temperatures during low load operation a complete combustion can be assured in the second combustor. The increased reactivity of higher hydrocarbons can also lead to a higher flame speed and thereby facilitates complete combustion.

Relative load can for example be defined as the actual power divided by the base load power which can be produced by the gas turbine at the respective ambient conditions.

For high load operation the first fuel which is fed to the first burner is provided with a concentration of higher hydrocarbons which is higher than the concentration of higher hydrocarbons of the fuel gas supplied to the gas turbine. The second fuel which is fed to the second combustor is provided with a concentration of higher hydrocarbons which is lower than the concentration of higher hydrocarbons of the fuel gas.

Depending on the fuel gas composition and the operating regime there is a risk of pre-ignition or flash back in the second combustor. The ignition delay time can typically be increased by reducing the concentration of higher hydrocarbons. Thus the proposed method allows safe operation at design hot gas temperature even when the fuel gas which is supplied to the gas turbine plant has a high concentration of higher hydrocarbons.

High load operation is operation in a load range from 60% to 100% relative load, and inludes peak load with increased firing temperature or operation with power augumentation such as water or steam injection into the combustor, or high fogging (also known as wet compression).

According to a further embodiement of the method the concentration of higher hydrocarbons of the first fuel flow, of second fuel flow or of both is controlled as a function of at least one of: the gas turbine load, a temperature indicative of the load.

A temperature indicative of the gas turbine load is for example a turbine inlet temperature, a hot gas temperature, the turbine exhaust temperature or a flame temperature. A pressure indicative of the gas turbine load is for example the compressor exit pressure or a combustion pressure. These pressures or temperatures can be measured directly or estimated based on measurements taken at other locations of the gas turbine as for example bleed or cooling air temperatures and pressures.

Further, the concentration of higher hydrocarbons of the first fuel flow, of the second fuel flow or of both can be controlled as a function of the combustor pulsation level.

For example if a threshold value in pulsations indicative of an approach to a lean blow off in the second combustor is exceeded the concentration of higher-value hydrocarbon in the fuel supply to a second combustor can be increased. This can for example occur when deloading the gas turbine. Alternatively, or in combination a threshold value in pulsations indicative of high hot gas temperatures in the second combustor is exceeded the concentration of higher-value hydrocarbon in the fuel supply to a second combustor can be reduced. This can for example occur when loading the gas turbine.

According to the claimed invention the fuel separation is bypassed and the fuel gas is directly fed to the first burner, and to the second combustor during operation in an intermediate load range. An intermediate load range can for example be in the range between 40% and 90%, or between 60% and 80% load. An overlap with low load and high load ranges is possible as the benifit of the change in fuel gas composition depends among others on the gas turbine design, the operating temperatures and the composition of the fuel gas supplied to the gas turbine.

According to another embodiment of the method dilution gas is admixed to the first combustion products before burning the mixture of first combustion products and second fuel. By admixing dilution gas the temperature in the second combustor can be reduced thereby increasing the ignition delay time. This enables better mixing of the second fuel with the first combustor products for low NOx emission and can further mitigate the pre-ignition risk in the second combustor.

According to a further embodiment of the method dilution gas is admixed to the first combustion products after injecting the second fuel. This can be used to create a homogenious temperature profile for the turbine inlet.

Dilution gas can for example be compressed air or a mixture of air and flue gases of a gas turbine. Also compressed flue gases can be used as dilution gas. It can be injected to control the temperature and temperature distribution in the second combustor.

According to yet another embodiment the gas turbine comprises a first group of sequential combustor arrangements, and a second group of sequential combustor arrangements to increase cumbustion stabilities, i.e. to mitigate pulsations. The first fuel is fed to the burners of the first group of sequential combustor arrangements, and the second fuel is fed to burners the second group of sequential combustor arrangements for staging. Alternatively or in addition the first fuel is fed to the second combustors of the first group of sequential combustor arrangements, and the second fuel is fed to the second combustors of the second group of sequential combustor arrangements for staging.

Staging in this context is staging in a gas turbine with a plurality of combustor arrangements distributed circumferentially around the axis of the gas turbine. This staging can be used for annular combustors where neighbouring sequential combustor arrangmenets influence each other. In some annular combustors several rows of burners can be distributed in radial direction. For such arrangements also a staging between sequential combustor arragements which are closer to the axis of the gas turbine and sequential combustor arragements wich are furher away from the axis of the gas turbine can be used.

Staging of fuel composition allows to operate burners or combustors with the same hot gas temperature while changing the reaction kinetics due to the different fuel composition and thereby supressing pulsations which might else occour when neighbouring burners or groups of burners are operated at the same temperature.

To further increase the operational flexibility and decrease the dependency on the fuel composition the rich fuel with high concentration of higher hydrocarbons (C2+) that is separated from the fuel gas when generating the lean fuel can be fed to an intermediate storage. The stored rich fuel can be used to provide a rich fuel when needed, for example during periods when the fuel gas is extremely lean, i.e. close to pure methane or when the separator is not operating. The gas separator can for example be shut-down for service or shut-down during the start-up or shut-down of the gas turbine below a minimum load or a threshold load of the gas turbine. A threshold load can for example be the houseload of the power plant, i.e. the gas turbine should produce all its internally used power before the separator is activated.

Due to spatial restrictions it might be beneficial to liquefy the separated, rich fuel prior to placing it in intermediate storage, to store it as a liquid gas and to evaporate it prior to adding into a fuel gas.

In addition to the method, a gas turbine configured for implementing the method is a subject of the disclosure according to claim 6. t comprises a gas turbine controller configured to operate the gas turbine according to the method.

A gas turbine according to the disclosure has a compressor, turbine and a sequential combustor arrangement comprising a first burner, a first combustion chamber, and a second combustor arranged sequentially in fluid flow connection.

The gas turbine further comprises a fuel gas supply and a fuel separation system connected to the fuel gas supply for separating a fuel gas into a rich fuel having a concentration of higher hydrocarbons which is higher than concentration of higher hydrocarbons of the fuel gas, and a lean hydrocarbon fuel having a concentration of higher hydrocarbons which is lower than concentration of higher hydrocarbons of the fuel gas. The plant further comprises a first lean fuel line with a first lean fuel control valve which connects the outlet for lean fuel of the fuel separation system with the first burner, and a first rich fuel line with a first rich fuel control valve which connects the outlet for rich fuel of the fuel separation system with the first burner. The plant also comprises a second lean fuel line with a second lean fuel control valve which connects the outlet for lean fuel of the fuel separation system with the second combustor, and a second rich fuel line with a second rich fuel control valve which connects the outlet for rich fuel of the fuel separation system with the second combustor.

According to one embodiment the gas turbine comprises first bypass line with a first bypass control valve which connects the fuel gas supply with the first burner for bypassing the fuel separation system. Alternatively or in addition it comprises a second bypass line with a second bypass control valve which connects the fuel gas supply with the second combustor for bypassing the fuel separation system.

The first rich fuel line and first lean fuel line can be joined upstream of the first burner for feeding a mixture of both fuels to the first burner. Also the the second rich fuel line and second lean fuel line are joined upstream of the second combustor for feeding amixture of both fuels to the second combustor. For arrangements with bypass lines these can join the first and second fuel lines before the first burner, and before the second combustor, respectively.

According to one embodiment the combustor arrangement comprises an injector for admixing dilution gas to the first combustion products arranged downstream of the first combustion chamber and upstream of a second reaction zone in the second combustor.

According to a further embodiment the second combustor comprises a dilution gas admixer for admixing a dilution gas to the first combustion products leaving the first combustion chamber, a second burner for admixing the second fuel, and a second combustion chamber. The dilution gas admixer, the second burner and second combustion chamber are arranged sequentially in a fluid flow connection, i.e. the exit of the dilution gas admixer is connected to the inlet of the second burner and the exit of the burner is connected to the inlet of the second combustion chamber.

The first combustor and second combustor can be part of a combustor arrangement configured to operate at practically the same pressure, i.e. the difference in operating pressure is only caused by the pressure loss of the gas flowing from the first combustor to the second, and which might be needed for good mixing of the first combustion products with the second fuel plus optionally for the admixing of a dilutoin gas. Typically the pressure loss of the sequential cobustor arrangement is less than 10% of the inlet pressure of the first burner, for example in the range of 3% to 6%. The inlet of the second combustor can be connected to the exit of the first combustion chamber without an interposed turbine.

According to yet a further embodiment the combustor arrangement comprises a first group of sequential combustor arrangements and a second group of sequential combustor arrangements. The first burners of the first group of sequential combustor arrangements are connected to the fuel line for the first fuel, and the first burners of the second group of sequential combustor arrangements are connected to the fuel line for second fuel for staging. Alternatively, or in combination the second combustors of the first group of sequential combustor arrangements are connected to the fuel line for the first fuel, and the second combustors of the second group of sequential combustor arrangements are connected to the fuel line for second fuel for staging. In other words individual burners or combustores or groups of burners or combustors are supplied for example alternatingly with the first fuel or the second fuel.

Typically such a sequential combustor arrangement comprises sequential combustors in a can architecture. The sequential combustor arrangement can also be in an annular arrangement with an annular first combustion chamber downstream of the first burners. The second combustors can also be arranged in annular architectures. A combination of can architecture first combustion chambers and annular second combustors or annular first combustion chambers and can architecture second combustors is also conceivable.

For the sequential combustor arrangement different burner types can be used. For example so called EV burner as known for example from the EP 0 321 809 or AEV burners as known for example from the DE195 47 913 can be used as first burner. Also a BEV burner comprising a swirl chamber as described in the European Patent application EP12189388.7, which is incorporated by reference, can be used. Further, a flame sheet combustor as described in US2004/0211186, which is incorporated by reference, can be used as first combustor.

The second combustor can simply comprise a second fuel injection followed by a reaction zone.

### Brief description of the drawings

The disclosure, its nature as well as its advantages, shall be described in more detail below with the aid of the accompanying schematic drawings.

Referring to the drawings:
Fig.1 shows a gas turbine with a compressor, a sequential combustion arrangement, and a turbine;
Fig. 2 shows a sequential combustion arrangement with a first burner, first combustion chamber, and a second combustor with a fuel separation system to supply different fuel qualities to the first burner and to the second combustor;
Fig. 3 shows a second example of a combustion system for a gas turbine with a fuel separation system and a dilution gas admixer;
Fig. 4 shows a gas turbine with a sequential combustion arrangement with a first burner, a first combustion chamber, a second burner with dilution gas admixer and a fuel injection followed by a second combustion chamber with a second combustion zone;
Fig. 5 shows a cross section of the sequential combustor arrangement with a fuel gas distribution system for circumferential staging.

### Embodiments of the disclosure

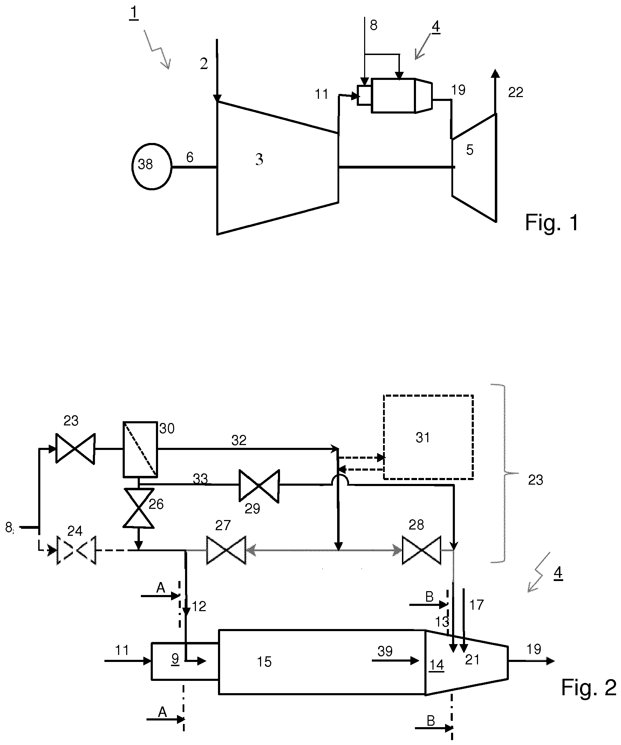

Fig. 1 shows a gas turbine 1 with a sequential combustor arrangement 4. It comprises a compressor 3, a sequential combustor arrangement 4, and a turbine 5.

Intake air 2 is compressed to compressed gas 11 by the compressor 3. Fuel gas 8 is supplied to subsequent locations of the sequential combustor arrangement and burned with the compressed gas 11 in the sequential combustor arrangement 4 to generate second combustion products 19. These are expanded in the turbine 5 generating mechanical work.

The gas turbine system can be coupled to a generator 38 via a shaft 6 of the gas turbine 1. Typically, a gas turbine 1 further comprises a cooling system for the turbine 5 and sequential combustor arrangement 4, which is not shown as it is not the subject of this disclosure.

Exhaust gases 22 leave the turbine 5. The remaining heat of the exhaust gases 22 is typically used in a subsequent water steam cycle, which is also not shown here.

A first example of a sequential combustor arrangement 4 according to the disclosure is shown in Fig. 2. This sequential combustor arrangement 4 comprises a first burner 9 into which the compressed gas 11 and the first fuel 12 are admitted. The mixture of compressed gas 11 and first fuel 12 is burned in the first combustion chamber 15 generating first combustion products 39. These flow into the second combustor 14 arranged downstream of the first combustion chamber.

The second combustor 14 comprises a dilution gas injection 17 and an injection for a second fuel 13. The mixture of first combustion products 39, dilution gas 17 and second fuel 13 react in the second reaction zone 21 of the second combustor 14 forming second combustion products 19 which leave the second combustor 14 and are admitted to the turbine.

The gas turbine 4 has a common fuel gas supply 8. The fuel system 46 comprises a fuel separation system 30 to separate an incoming fuel gas 8 into a rich fuel 32 having a concentration of higher hydrocarbons which is higher than concentration of higher hydrocarbons of the fuel gas 8, and a lean fuel 33 having a concentration of higher hydrocarbons which is lower than the concentration of higher hydrocarbons of the fuel gas 8. A fuel gas separator inlet control valve 23 is arranged in the line connecting the fuel gas 8 supply to the fuel separation system 30.

A line for rich fuel 32 leaving the fuel separation system is split into two lines. One line is connected to a line feeding the first fuel 12 to the first burner 9. A first rich fuel control valve 27 is arranged in this line to control the flow of rich fuel 32 to the first burner 9.

Another line for rich fuel 32 is connected to a line feeding the second fuel 13 to the second combustor 14. A second rich fuel control valve 28 is arranged in this line to control the flow of rich fuel 32 to the second combustor 14.

An optional rich fuel storage 31 can be connected to the fuel separator via the line for rich fuel 32. This allows the storage of rich fuel in case of excess production or keep a stock of rich fuel for example for times when only lean fuel is available as fuel gas 8 from the fuel gas supply.

A line for lean fuel 33 leaving the fuel separation system is split into two lines. One line is connected to a line feeding the first fuel 12 to the first burner 9. A first lean fuel control valve 26 is arranged in this line to control the flow of lean fuel 33 to the first burner 9. Another line for lean fuel 33 is connected to a line feeding the second fuel 13 to the second combustor 14. A second lean fuel control valve 29 is arranged in this line to control the flow of lean fuel 33 to the second combustor 14.

The line from the second rich fuel control valve 28 and second lean control valve 29 are joint and connected to the second combustor 14 for supplying it with the second fuel 13.

The line from the first rich fuel control valve 27 and first lean fuel control valve 26 are joint and connected to the first burner 9 for supplying it with the first fuel 12.

In addition an optional line for fuel gas 8 is arranged to bypass the fuel separation system 30 and connects the fuel supply directly to the line for the first fuel 12. A first bypass control valve 24 is arranged in this line and controls the optional bypass flow of fuel gas 8 which can be directly fed to the first burner 9.

In this embodiment with a can architecture the first combustion chamber 15 has a smooth cylindrical flow path. The transition from a circular cross section of the first combustion chamber 15 to a cross section with a shape of a section of an annulus or practically rectangular flow cross section at the outlet, i.e. at the turbine inlet, is integrated into the second combustor 14.

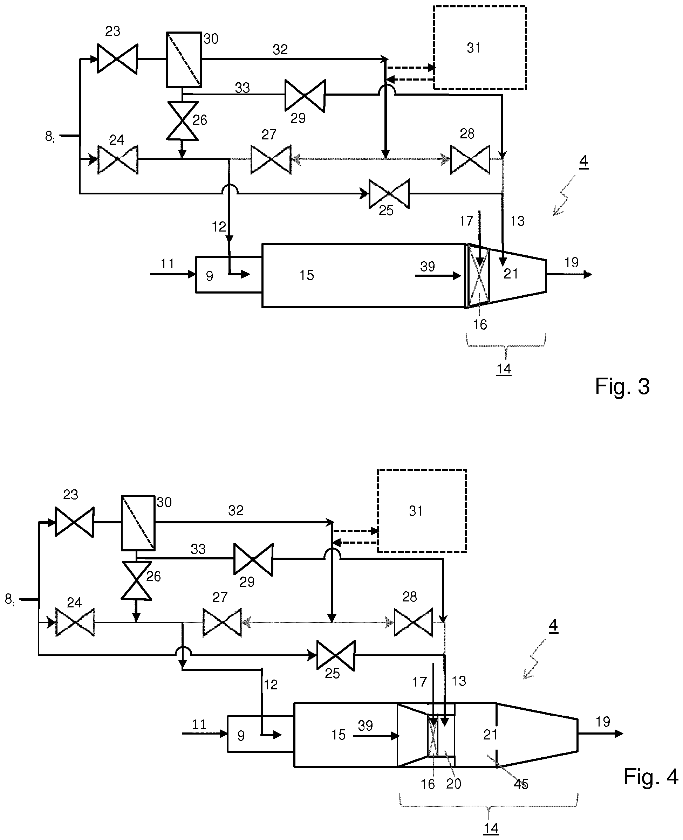

The embodiments of Fig. 3 and 4 are based on Fig. 2. The fuel system of the examples of Figs. 3 and 4 comprise a further line for fuel gas 8 for bypassing the fuel separation system 30. This line connects the fuel supply directly to the line for the second fuel 13. A second bypass control valve 25 is arranged in this line and controls the bypass flow of fuel gas 8 which can be directly fed to the second combustor 14.

The example of Fig.3 further comprises a mixer 16 for admixing of dilution gas. The first combustion products 39 are admitted to the second combustor 14 at an upstream end. Dilution gas 17 is admixed in a mixer 16 which is integrated into the second combustor 14.

The example of Fig.4 further comprises a second burner 20 with a mixer 16 for admixing of dilution gas. The first combustion products 39 are admitted to the second burner 20 and second fuel 13 is injected into the second burner 20 and mixed with the first combustion products 39, and dilution gas 17. The second fuel 13 can also be admitted to the mixer 16 and mixed with the first combustion products 39 and dilution gas 17 in the mixer 16 (not shown here). Downstream of the second burner 20 a second combustion chamber with a second reaction zone 21 is arranged. In this example the cross section of the flow path of the second burner 20 at the outlet is smaller than the cross section of the subsequent second reaction zone 21 for flame stabilization at the inlet of the second combustion chamber.

In all examples dilution gas 17 (not shown) can also be injected together with the first fuel 12 and second fuel 13.

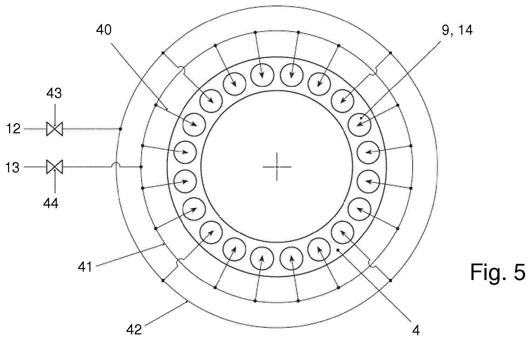

Fig. 5 shows an optional design of the cross section A - A, respectively B - B of Fig. 2. Section A-A is a cut through the first burner 9 and section B -B a cut through the second combustor 14. Fig. 5 shows an example of a fuel distribution system with two fuel distribution rings 41, 42. The first fuel distribution ring 41 is connected to the fuel line via a first fuel staging valve 43. The second fuel distribution ring 42 is connected to the second fuel line via a second fuel staging valve 44.

The first burners 9, respectively the second combustors 14 are alternatingly connected to the first fuel distribution ring 41 and to the second fuel distribution ring 42 via fuel feeds 40. The first burners 9, respectively the second combustors 14 can also be connected in pair arrangements or other groups of 3 or more, which can be advantageous to mitigate pulsations.

For all shown arrangements can or annular architectures or any combination of the two is possible.

All the explained advantages are not limited to the specified combinations but can also be used in other combinations or alone without departing from the scope of the disclosure. Other possibilities are optionally conceivable, for example the dilution gas 17 can be re-cooled in a cooling gas cooler before use as dilution gas.

### List of designations

- 1: Gas turbine
- 2: Intake air
- 3: Compressor
- 4: Sequential combustor arrangement
- 5: Turbine
- 6: Shaft
- 7: Sequential combustor
- 8: Fuel gas
- 9: First burner
- 10: Fuel feed
- 11: Compressed gas
- 12: First fuel
- 13: Second fuel
- 14: Second combustor
- 15: First combustion chamber
- 16: Mixer
- 17: Dilution gas
- 19: Second combustion Products
- 20: Second burner
- 21: Second reaction zone
- 22: Exhaust Gas
- 23: Fuel separator inlet control valve
- 24: First bypass control valve
- 25: Second bypass control valve
- 26: First lean fuel control valve
- 27: First rich fuel control valve
- 28: Second rich fuel control valve
- 29: Second lean fuel control valve
- 30: fuel separation system
- 31: rich fuel storage
- 32: rich fuel
- 33: lean fuel
- 38: Generator
- 39: First combustion products
- 40: Fuel feed
- 41: First fuel distribution ring
- 42: second fuel distribution ring
- 43: First fuel staging valve
- 44: Second fuel staging valve
- 45: Second combustion chamber
- 46: Fuel system

## Claims

1. Method for operating a gas turbine plant (1) with a compressor (3), a turbine (5), and a sequential combustor arrangement (4) comprising a first burner (9), a first combustion chamber (15), and a second combustor (14)
the method comprising the steps of
- compressing the inlet gas in the compressor (3),
- separating a fuel gas (8) into a rich fuel (32) having a concentration of higher hydrocarbons which is higher than the concentration of higher hydrocarbons of the fuel gas (8), and a lean fuel (33) having a concentration of higher hydrocarbons which is lower than the concentration of higher hydrocarbons of the fuel gas (8),
- feeding a first fuel (12) comprising at least one of the rich fuel (32), the lean fuel (33), and the fuel gas (8) or a mixture thereof to at least one first burner (9) wherein the concentration of higher hydrocarbons in the first fuel (12) differs from the concentration of higher hydrocarbons of the fuel gas (8),
- burning the first fuel (12) and the compressed gas (11) in the first combustion chamber (15) to obtain first combustion products (39),
- feeding a second fuel (13) comprising at least one of the rich fuel (32), the lean fuel (33), and the fuel gas (8) or a mixture thereof to at least one second combustor (14) wherein the concentration of higher hydrocarbons in the second fuel (13) differs from the concentration of higher hydrocarbons of the fuel gas (8) and of the first fuel (12),
- burning the second fuel (13) with the first combustion products (39) to obtain second combustion products (19), and
- expanding the second combustion products (19) in the turbine (5), wherein
for low load operation the first fuel (12) which is fed to the first burner (9) is provided with a concentration of higher hydrocarbons which is lower than the concentration of higher hydrocarbons of the fuel gas (8), and the second fuel (13) which is fed to the second combustor (14) is provided with a concentration of higher hydrocarbons which is higher than the the concentration of higher hydrocarbons of the fuel gas (8) for stabilizing the combustion; while
for high load operation the first fuel (12) which is fed to the first burner (9) is provided with a concentration of higher hydrocarbons which is higher than the concentration of higher hydrocarbons of the fuel gas (8), and the second fuel (˙13) which is fed to the second combustor (14) is provided with a concentration of higher hydrocarbons which is lower than the concentration of higher hydrocarbons of the fuel gas (8) for reducing the flame speed **characterized in that** during operation in an intermediate load range the fuel separation is bypassed and the fuel gas (8) is directly fed to the first burner (9), and to the second combustor (14).

2. The method according to claim 1, **characterized in that** the concentration of higher hydrocarbons of the first fuel flow (12) and/or of second fuel flow (13) is controlled as a function of at least one of: the gas turbine load, a temperature indicative of the load, a pressure indicative of the load, or combustion pulsations.

3. The method according to one of the claims 1 to 2, **characterized in that** dilution gas (17) is admixed to the first combustion products (39) before burning the mixture of first combustion products (39) and second fuel (13).

4. The method according to one of the claims 1 to 3, **characterized in that** dilution gas (17) is admixed to the first combustion products (39) after injecting the second fuel (13).

5. The method according to one of the claims 1 to 4, **characterized in that** the gas turbine plant (1) comprises a first group of sequential combustor arrangements (4), and a second group of sequential combustor arrangements (4), wherein the first fuel (12) is fed to the burners (9) of first group of sequential combustor arrangements (4), and wherein the second fuel (13) is fed to burners (9) of the second group of sequential combustor arrangements (4) for staging, and/or in that the first fuel (12) is fed to the second combustors (14) of the first group of sequential combustor arrangements (4), and wherein the second fuel (13) is fed to the combustors (14) of the second group of sequential combustor arrangements (4) for staging.

6. A gas turbine plant (1) with a compressor (3), turbine and a sequential combustor arrangement (4) comprising a first burner (9), a first combustion chamber (15), and a second combustor (14) arranged sequentially in fluid flow connection,
wherein the gas turbine plant (1) comprises a fuel gas supply and a fuel separation system (30) connected to the fuel gas supply for separating a fuel gas (8) into a rich fuel (32) having a concentration of higher hydrocarbons which is higher than concentration of higher hydrocarbons of the fuel gas (8), and a lean fuel (33) having a concentration of higher hydrocarbons which is lower than concentration of higher hydrocarbons of the fuel gas (8),
- a first lean fuel line with a first lean fuel control valve (26), connecting the fuel separation system (30) with the first burner (9), and a first rich fuel line with a first rich fuel control valve (27) connecting the fuel separation system (30) with the first burner (9)
- a second lean fuel line with a second lean fuel control valve (29), connecting the fuel separation system (30) with the second combustor (14), and a second rich fuel line with a second rich fuel control valve (28) connecting the fuel separation system (30) with the second combustor (14);
- a first fuel gas line with a first fuel gas control valve (24) connecting the fuel gas supply with the first burner (9) for bypassing the fuel separation system (30) and/or in that it comprises a second fuel gas line with a second fuel gas control valve (25) connecting the fuel gas supply with the second combustor (14) for bypassing the fuel separation system (30);
the gas turbine being **characterized by** comprising a controller configured to regulate the first lean fuel control valve (26), the first rich fuel control valve (27), the second lean fuel control valve (29), the second rich fuel control valve (28), the first fuel gas control valve (24) and the second fuel gas control valve (25) so as to:
- provide a first fuel (12) to the first burner (9) with a concentration of higher hydrocarbons which is lower than the concentration of higher hydrocarbons of the fuel gas (8), and provide a second fuel (13) to the second combustor (14) with a concentration of higher hydrocarbons which is higher than the the concentration of higher hydrocarbons of the fuel gas (8) for stabilizing the combustion when the gas turbine operates at low load;
- provide a first fuel (12) to the first burner (9) with a concentration of higher hydrocarbons which is higher than the concentration of higher hydrocarbons of the fuel gas (8), and provide a second fuel (13) to the second combustor (14) with a concentration of higher hydrocarbons which is lower than the concentration of higher hydrocarbons of the fuel gas (8) for reducing the flame speed when the gas turbine operates at high load; and
- directly feed the fuel gas (8) to the first burner (9) and to the second combustor (14) bypassing fuel separation when the gas turbine operates in an intermediate load range.

7. A gas turbine plant (1) according to claim 6, **characterized in that** the combustor arrangement (4) comprises an injector for admixing dilution gas (17) to the first combustion products (39), arranged downstream of the first combustion chamber (15) and upstream of a second reaction zone (21) in the second combustor.

8. A gas turbine plant (1) according to claim 6 or 7, **characterized in that** the second combustor (14) comprises an a dilution gas admixer (27) for admixing a dilution gas (33) to the first combustion products (39) leaving the first combustion chamber (15), a second burner (20) for admixing the second fuel (13), and a second combustion chamber (45), wherein the dilution gas admixer (27), the second burner (20) and second combustion chamber (45) are arranged sequentially in a fluid flow connection

9. A gas turbine plant (1) according to one of the claims 6 to 8, **characterized in that** it the exit of the first combustion chamber (15) is connected to the second combustor (14) without an interposed turbine.

10. A gas turbine plant (1) according to one of the claims 6 to 9, **characterized in that** the gas turbine plant (1) comprises a first group of sequential combustor arrangements (4) and a second group of sequential combustor arrangements (4), wherein the fuel line for the first fuel (12) is connected to the first burners (9) of the first group of sequential combustor arrangements (4), and wherein the fuel line for second fuel (13) is connected to the first burners (9) of the second group of sequential combustor arrangements (4) for staging, and/or wherein the fuel line for the first fuel (12) is connected to the second combustors (14) of the first group of sequential combustor arrangements (4), and wherein the fuel line for second fuel (13) is connected to the second combustors (14) of the second group of sequential combustor arrangements (4) for staging.

## Patentansprüche

1. Verfahren zum Betreiben einer Gasturbinenanlage (1) mit einem Verdichter (3), einer Turbine (5) und einer sequentiellen Verbrenneranordnung (4), die einen ersten Brenner (9), eine erste Brennkammer (15) und einen zweiten Verbrenner (14) umfasst,
wobei das Verfahren die Schritte umfasst:
- Verdichten des Einlassgases im Verdichter (3),
- Trennen eines Brennstoffgases (8) in einen fetten Brennstoff (32) mit einer Konzentration an höheren Kohlenwasserstoffen, die höher ist als die Konzentration an höheren Kohlenwasserstoffen des Brennstoffgases (8), und einen mageren Brennstoff (33) mit einer Konzentration an höheren Kohlenwasserstoffen, die niedriger ist als die Konzentration an höheren Kohlenwasserstoffen des Brennstoffgases (8),
- Zuführen eines ersten Brennstoffs (12), der wenigstens einen von dem fetten Brennstoff (32), dem mageren Brennstoff (33) und dem Brennstoffgas (8) oder eine Mischung davon umfasst, zu wenigstens einem ersten Brenner (9), wobei die Konzentration höherer Kohlenwasserstoffe in dem ersten Brennstoff (12) verschieden ist von der Konzentration höherer Kohlenwasserstoffe des Brennstoffgases (8),
- Verbrennen des ersten Brennstoffs (12) und des verdichteten Gases (11) in der ersten Brennkammer (15), um erste Verbrennungsprodukte (39) zu erhalten,
- Zuführen eines zweiten Brennstoffs (13), der wenigstens einen von dem fetten Brennstoff (32), dem mageren Brennstoff (33) und dem Brennstoffgas (8) oder einer Mischung davon umfasst, zu wenigstens einem zweiten Verbrenner (14), wobei die Konzentration höherer Kohlenwasserstoffe in dem zweiten Brennstoff (13) verschieden ist von der Konzentration höherer Kohlenwasserstoffe des Brennstoffgases (8) und des ersten Brennstoffs (12),
- Verbrennen des zweiten Brennstoffs (13) mit den ersten Verbrennungsprodukten (39), um zweite Verbrennungsprodukte (19) zu erhalten, und
- Entspannen der zweiten Verbrennungsprodukte (19) in der Turbine (5), wobei
bei Schwachlastbetrieb der erste Brennstoff (12), der dem ersten Brenner (9) zugeführt wird, mit einer Konzentration höherer Kohlenwasserstoffe versehen ist, die niedriger ist als die Konzentration höherer Kohlenwasserstoffe des Brennstoffgases (8), und der zweite Brennstoff (13), der dem zweiten Verbrenner (14) zugeführt wird, mit einer Konzentration höherer Kohlenwasserstoffe versehen ist, die höher ist als die Konzentration höherer Kohlenwasserstoffe des Brennstoffgases (8), um die Verbrennung zu stabilisieren; während
bei Hochlastbetrieb der erste Brennstoff (12), der dem ersten Brenner (9) zugeführt wird, mit einer Konzentration höherer Kohlenwasserstoffe versehen ist, die höher ist als die Konzentration höherer Kohlenwasserstoffe des Brennstoffgases (8), und der zweite Brennstoff (13), der dem zweiten Verbrenner (14) zugeführt wird, mit einer Konzentration höherer Kohlenwasserstoffe versehen ist, die niedriger ist als die Konzentration höherer Kohlenwasserstoffe des Brennstoffgases (8), um die Flammengeschwindigkeit zu reduzieren, **dadurch gekennzeichnet, dass** während des Betriebs in einem Zwischenlastbereich die Brennstofftrennung umgangen wird und das Brennstoffgas (8) direkt dem ersten Brenner (9) und dem zweiten Verbrenner (14) zugeführt wird.

2. Verfahren nach Anspruch 1, **dadurch gekennzeichnet, dass** die Konzentration der höheren Kohlenwasserstoffe des ersten Brennstoffstroms (12) und/oder des zweiten Brennstoffstroms (13) in Abhängigkeit von wenigstens einer der folgenden Größen gesteuert/geregelt wird: die Gasturbinenlast, eine die Last kennzeichnende Temperatur, einen die Last kennzeichnenden Druck, oder Verbrennungspulsationen.

3. Verfahren nach einem der Ansprüche 1 bis 2, **dadurch gekennzeichnet, dass** Verdünnungsgas (17) den ersten Verbrennungsprodukten (39) zugemischt wird, bevor das Gemisch aus den ersten Verbrennungsprodukten (39) und dem zweiten Brennstoff (13) verbrannt wird.

4. Verfahren nach einem der Ansprüche 1 bis 3, **dadurch gekennzeichnet, dass** Verdünnungsgas (17) den ersten Verbrennungsprodukten (39) nach dem Einspritzen des zweiten Brennstoffs (13) zugemischt wird.

5. Verfahren nach einem der Ansprüche 1 bis 4, **dadurch gekennzeichnet, dass** die Gasturbinenanlage (1) eine erste Gruppe von sequentiellen Verbrenneranordnungen (4) und eine zweite Gruppe von sequentiellen Verbrennungsanordnungen (4) umfasst, wobei der erste Brennstoff (12) den Brennern (9) der ersten Gruppe von sequentiellen Verbrenneranordnungen (4) zugeführt wird, und wobei der zweite Brennstoff (13) zur Stufenbildung den Brennern (9) der zweiten Gruppe von sequentiellen Verbrenneranordnungen (4) zugeführt wird, und/oder dass der erste Brennstoff (12) den zweiten Verbrennern (14) der ersten Gruppe von sequentiellen Verbrenneranordnungen (4) zugeführt wird, und wobei der zweite Brennstoff (13) zur Stufenbildung den Verbrennern (14) der zweiten Gruppe von sequentiellen Verbrenneranordnungen (4) zugeführt wird.

6. Gasturbinenanlage (1) mit einem Verdichter (3), einer Turbine und einer sequentiellen Verbrenneranordnung (4), die einen ersten Brenner (9), eine erste Brennkammer (15) und einen zweiten Verbrenner (14) umfasst, die aufeinanderfolgend in Fluidströmungsverbindung angeordnet sind,
wobei die Gasturbinenanlage (1) eine Brennstoffgaszuführung und ein Brennstofftrennsystem (30) umfasst, das mit der Brennstoffgaszuführung verbunden ist, um ein Brennstoffgas (8) in einen fetten Brennstoff (32) mit einer Konzentration höherer Kohlenwasserstoffe, die höher ist als die Konzentration höherer Kohlenwasserstoffe des Brennstoffgases (8), und einen mageren Brennstoff (33) mit einer Konzentration höherer Kohlenwasserstoffe, die niedriger ist als die Konzentration höherer Kohlenwasserstoffe des Brennstoffgases (8), zu trennen,
- eine erste Magerbrennstoff-Leitung mit einem ersten Magerbrennstoff-Steuerventil (26), die das Brennstofftrennsystem (30) mit dem ersten Brenner (9) verbindet, und eine erste Fettbrennstoff-Leitung mit einem ersten Fettbrennstoff-Steuerventil (27), die das Brennstofftrennsystem (30) mit dem ersten Brenner (9) verbindet
- eine zweite Magerbrennstoff-Leitung mit einem zweiten Magerbrennstoff-Steuerventil (29) für mageren Kraftstoff, die das Kraftstofftrennsystem (30) mit dem zweiten Verbrenner (14) verbindet, und eine zweite Fettbrennstoff-Leitung mit einem zweiten Fettbrennstoff-Steuerventil (28), die das Kraftstofftrennsystem (30) mit dem zweiten Verbrenner (14) verbindet;
- eine erste Brennstoffgasleitung mit einem ersten Brennstoffgassteuerventil (24), die die Brennstoffgaszuführung mit dem ersten Brenner (9) verbindet, um das Brennstofftrennsystem (30) zu umgehen, und/oder eine zweite Brennstoffgasleitung mit einem zweiten Brennstoffgassteuerventil (25), die die Brennstoffgaszuführung mit dem zweiten Verbrenner (14) verbindet, um das Brennstofftrennsystem (30) zu umgehen; wobei die Gasturbine **dadurch gekennzeichnet ist, dass** sie eine Steuer/Regelvorrichtung umfasst, die dafür konfiguriert ist, das erste Magerbrennstoff-Steuerventil (26), das erste Fettbrennstoff-Steuerventil (27), das zweite Magerbrennstoff-Steuerventil (29), das zweite Fettbrennstoff-Steuerventil (28), das erste BrennstoffgasSteuerventil (24) und das zweite BrennstoffgasSteuerventil (25) so zu regeln, dass:
- dem ersten Brenner (9) ein erster Brennstoff (12) mit einer Konzentration höherer Kohlenwasserstoffe zugeführt wird, die niedriger ist als die Konzentration höherer Kohlenwasserstoffe des Brennstoffgases (8), und dem zweiten Verbrenner (14) ein zweiter Brennstoff (13) mit einer Konzentration höherer Kohlenwasserstoffe zugeführt wird, die höher ist als die Konzentration höherer Kohlenwasserstoffe des Brennstoffgases (8), um die Verbrennung zu stabilisieren, wenn die Gasturbine bei niedriger Last betrieben wird;
- dem ersten Brenner (9) ein erster Brennstoff (12) mit einer Konzentration höherer Kohlenwasserstoffe zugeführt wird, die höher ist als die Konzentration höherer Kohlenwasserstoffe des Brennstoffgases (8), und dem zweiten Verbrenner (14) ein zweiter Brennstoff (13) mit einer Konzentration höherer Kohlenwasserstoffe zugeführt wird, die niedriger ist als die Konzentration höherer Kohlenwasserstoffe des Brennstoffgases (8), um die Flammengeschwindigkeit zu reduzieren, wenn die Gasturbine bei hoher Last betrieben wird; und
- das Brennstoffgas (8) direkt dem ersten Brenner (9) und dem zweiten Verbrenner (14) unter Umgehung der Brennstofftrennung zugeführt wird, wenn die Gasturbine in einem Zwischenlastbereich betrieben wird.

7. Gasturbinenanlage (1) nach Anspruch 6, **dadurch gekennzeichnet, dass** die Verbrenneranordnung (4) einen Injektor zum Zumischen von Verdünnungsgas (17) zu den ersten Verbrennungsprodukten (39) umfasst, der stromabwärts der ersten Brennkammer (15) und stromaufwärts einer zweiten Reaktionszone (21) in dem zweiten Verbrenner angeordnet ist.

8. Gasturbinenanlage (1) nach Anspruch 6 oder 7, **dadurch gekennzeichnet, dass** der zweite Verbrenner (14) einen Verdünnungsgas-Zumischer (27) zum Zumischen eines Verdünnungsgases (33) zu den ersten Verbrennungsprodukten (39), die die erste Brennkammer (15) verlassen, einen zweiten Brenner (20) zum Zumischen des zweiten Brennstoffs (13) und eine zweite Brennkammer (45) umfasst, wobei der Verdünnungsgas-Zumischer (27), der zweite Brenner (20) und die zweite Brennkammer (45) aufeinanderfolgend in einer Fluidströmungsverbindung angeordnet sind.

9. Gasturbinenanlage (1) nach einem der Ansprüche 6 bis 8, **dadurch gekennzeichnet, dass** der Ausgang der ersten Brennkammer (15) ohne zwischengeschaltete Turbine mit dem zweiten Verbrenner (14) verbunden ist.

10. Gasturbinenanlage (1) nach einem der Ansprüche 6 bis 9, **dadurch gekennzeichnet, dass** die Gasturbinenanlage (1) eine erste Gruppe von sequentiellen Verbrenneranordnungen (4) und eine zweite Gruppe von sequentiellen Verbrenneranordnungen (4) umfasst, wobei die Brennstoffleitung für den ersten Brennstoff (12) mit den ersten Brennern (9) der ersten Gruppe von sequentiellen Verbrenneranordnungen (4) verbunden ist, und wobei zur Stufenbildung die Brennstoffleitung für den zweiten Brennstoff (13) mit den ersten Brennern (9) der zweiten Gruppe von sequentiellen Verbrenneranordnungen (4) verbunden ist, und/oder wobei die Brennstoffleitung für den ersten Brennstoff (12) mit den zweiten Verbrennern (14) der ersten Gruppe von sequentiellen Verbrenneranordnungen (4) verbunden ist, und wobei zur Stufenbildung die Brennstoffleitung für den zweiten Brennstoff (13) mit den zweiten Verbrennern (14) der zweiten Gruppe von sequentiellen Verbrenneranordnungen (4) verbunden ist.

## Revendications

1. Procédé pour mettre en œuvre une centrale à turbine à gaz (1) avec un compresseur (3), une turbine (5), et un agencement de chambres de combustion séquentielles (4) comprenant un premier brûleur (9), une première chambre de combustion (15), et une deuxième chambre de combustion (14),
le procédé comprenant les étapes
- de compression du gaz d'entrée dans le compresseur (3),
- de séparation d'un combustible gazeux (8) en un combustible riche (32) ayant une concentration d'hydrocarbures supérieurs qui est supérieure à la concentration d'hydrocarbures supérieurs du combustible gazeux (8), et un combustible pauvre (33) ayant une concentration d'hydrocarbures supérieurs qui est inférieure à la concentration d'hydrocarbures supérieurs du combustible gazeux (8),
- de fourniture d'un premier combustible (12) comprenant au moins l'un du combustible riche (32), du combustible pauvre (33), et du combustible gazeux (8) ou un mélange de ceux-ci à au moins un premier brûleur (9), dans lequel la concentration d'hydrocarbures supérieurs dans le premier combustible (12) diffère de la concentration d'hydrocarbures supérieurs du combustible gazeux (8),
- de combustion du premier combustible (12) et du gaz comprimé (11) dans la première chambre de combustion (15) pour obtenir des premiers produits de combustion (39),
- de fourniture d'un deuxième combustible (13) comprenant au moins l'un du combustible riche (32), du combustible pauvre (33), et du combustible gazeux (8) ou un mélange de ceux-ci à au moins une deuxième chambre de combustion (14), dans lequel la concentration d'hydrocarbures supérieurs dans le deuxième combustible (13) diffère de la concentration d'hydrocarbures supérieurs du combustible gazeux (8) et du premier combustible (12),
- de combustion du deuxième combustible (13) avec les premiers produits de combustion (39) pour obtenir des deuxièmes produits de combustion (19), et
- de détente des deuxièmes produits de combustion (19) dans la turbine (5), dans lequel
pour un fonctionnement à faible charge, le premier combustible (12) qui est fourni au premier brûleur (9) est doté d'une concentration d'hydrocarbures supérieurs qui est inférieure à la concentration d'hydrocarbures supérieurs du combustible gazeux (8), et le deuxième combustible (13) qui est fourni à la deuxième chambre de combustion (14) est doté d'une concentration d'hydrocarbures supérieurs qui est supérieure à la concentration d'hydrocarbures supérieurs du combustible gazeux (8) pour stabiliser la combustion ; alors que
pour un fonctionnement à charge élevée, le premier combustible (12) qui est fourni au premier brûleur (9) est doté d'une concentration d'hydrocarbures supérieurs qui est supérieure à la concentration d'hydrocarbures supérieurs du combustible gazeux (8), et le deuxième combustible (13) qui est fourni à la deuxième chambre de combustion (14) est doté d'une concentration d'hydrocarbures supérieurs qui est inférieure à la concentration d'hydrocarbures supérieurs du combustible gazeux (8) pour réduire la vitesse de flamme,
**caractérisé en ce que**, pendant un fonctionnement dans une plage de charge intermédiaire, la séparation du combustible est contournée et le combustible gazeux (8) est directement fourni au premier brûleur (9), et à la deuxième chambre de combustion (14).

2. Procédé selon la revendication 1, **caractérisé en ce que** la concentration d'hydrocarbures supérieurs du premier écoulement de combustible (12) et/ou du deuxième écoulement de combustible (13) est commandée en fonction d'au moins l'une : de la charge de la turbine à gaz, d'une température indicative de la charge, d'une pression indicative de la charge, ou des pulsations de combustion.

3. Procédé selon l'une des revendications 1 et 2, **caractérisé en ce qu'**un gaz de dilution (17) est mélangé aux premiers produits de combustion (39) avant la combustion du mélange des premiers produits de combustion (39) et du deuxième combustible (13).

4. Procédé selon l'une des revendications 1 à 3, **caractérisé en ce qu'**un gaz de dilution (17) est mélangé aux premiers produits de combustion (39) après l'injection du deuxième combustible (13).

5. Procédé selon l'une des revendications 1 à 4, **caractérisé en ce que** la centrale à turbine à gaz (1) comprend un premier groupe d'agencements de chambres de combustion séquentielles (4), et un deuxième groupe d'agencements de chambres de combustion séquentielles (4), dans lequel le premier combustible (12) est fourni aux brûleurs (9) du premier groupe d'agencements de chambres de combustion séquentielles (4), et dans lequel le deuxième combustible (13) est fourni aux brûleurs (9) du deuxième groupe d'agencements de chambres de combustion séquentielles (4) pour un étagement, et/ou **en ce que** le premier combustible (12) est fourni aux deuxièmes chambres de combustion (14) du premier groupe d'agencements de chambres de combustion séquentielles (4), et dans lequel le deuxième combustible (13) est fourni aux chambres de combustion (14) du deuxième groupe d'agencements de chambres de combustion séquentielles (4) pour un étagement.

6. Centrale à turbine à gaz (1) avec un compresseur (3), une turbine et un agencement de chambres de combustion séquentielles (4) comprenant un premier brûleur (9), une première chambre de combustion (15), et une deuxième chambre de combustion (14) agencés séquentiellement en une liaison d'écoulement de fluide,
dans laquelle la centrale à turbine à gaz (1) comprend une alimentation en combustible gazeux et un système de séparation de combustible (30) relié à l'alimentation en combustible gazeux pour séparer un combustible gazeux (8) en un combustible riche (32) ayant une concentration d'hydrocarbures supérieurs qui est supérieure à la concentration d'hydrocarbures supérieurs du combustible gazeux (8), et un combustible pauvre (33) ayant une concentration d'hydrocarbures supérieurs qui est inférieure à la concentration d'hydrocarbures supérieurs du combustible gazeux (8),
- une première conduite de combustible pauvre avec une première vanne de régulation de combustible pauvre (26), reliant le système de séparation de combustible (30) au premier brûleur (9), et une première conduite de combustible riche avec une première vanne de régulation de combustible riche (27) reliant le système de séparation de combustible (30) au premier brûleur (9) ;
- une deuxième conduite de combustible pauvre avec une deuxième vanne de régulation de combustible pauvre (29), reliant le système de séparation de combustible (30) à la deuxième chambre de combustion (14), et une deuxième conduite de combustible riche avec une deuxième vanne de régulation de combustible riche (28) reliant le système de séparation de combustible (30) à la deuxième chambre de combustion (14) ;
- une première conduite de combustible gazeux avec une première vanne de régulation de combustible gazeux (24) reliant l'alimentation en combustible gazeux au premier brûleur (9) pour contourner le système de séparation de combustible (30) et/ou une deuxième conduite de combustible gazeux avec une deuxième vanne de régulation de combustible gazeux (25) reliant l'alimentation en combustible gazeux à la deuxième chambre de combustion (14) pour contourner le système de séparation de combustible (30)
; la turbine à gaz étant **caractérisée en ce qu'**elle comprend un contrôleur configuré pour réguler la première vanne de régulation de combustible pauvre (26), la première vanne de régulation de combustible riche (27), la deuxième vanne de régulation de combustible pauvre (29), la deuxième vanne de régulation de combustible riche (28), la première vanne de régulation de combustible gazeux (24) et la deuxième vanne de régulation de combustible gazeux (25) de manière à :
- fournir un premier combustible (12) au premier brûleur (9) avec une concentration d'hydrocarbures supérieurs qui est inférieure à la concentration d'hydrocarbures supérieurs du combustible gazeux (8), et fournir un deuxième combustible (13) à la deuxième chambre de combustion (14) avec une concentration d'hydrocarbures supérieurs qui est supérieure à la concentration d'hydrocarbures supérieurs du combustible gazeux (8) pour stabiliser la combustion lorsque la turbine à gaz fonctionne à faible charge ;
- fournir un premier combustible (12) au premier brûleur (9) avec une concentration d'hydrocarbures supérieurs qui est supérieure à la concentration d'hydrocarbures supérieurs du combustible gazeux (8), et fournir un deuxième combustible (13) à la deuxième chambre de combustion (14) avec une concentration d'hydrocarbures supérieurs qui est inférieure à la concentration d'hydrocarbures supérieurs du combustible gazeux (8) pour réduire la vitesse de flamme lorsque la turbine à gaz fonctionne à charge élevée ; et
- fournir directement le combustible gazeux (8) au premier brûleur (9) et à la deuxième chambre de combustion (14) en contournant la séparation de combustible lorsque la turbine à gaz fonctionne dans une plage de charge intermédiaire.

7. Centrale à turbine à gaz (1) selon la revendication 6, **caractérisée en ce que** l'agencement de chambres de combustion (4) comprend un injecteur pour mélanger un gaz de dilution (17) aux premiers produits de combustion (39), agencé en aval de la première chambre de combustion (15) et en amont d'une deuxième zone de réaction (21) dans la deuxième chambre de combustion.

8. Centrale à turbine à gaz (1) selon la revendication 6 ou 7, **caractérisée en ce que** la deuxième chambre de combustion (14) comprend un mélangeur de gaz de dilution (27) pour mélanger un gaz de dilution (33) aux premiers produits de combustion (39) quittant la première chambre de combustion (15), un deuxième brûleur (20) pour mélanger le deuxième combustible (13), et une deuxième chambre de combustion (45), dans laquelle le mélangeur de gaz de dilution (27), le deuxième brûleur (20) et la deuxième chambre de combustion (45) sont agencés séquentiellement en une liaison d'écoulement de fluide.

9. Centrale à turbine à gaz (1) selon l'une des revendications 6 à 8, **caractérisée en ce que** la sortie de la première chambre de combustion (15) est reliée à la deuxième chambre de combustion (14) sans interposition d'une turbine.

10. Centrale à turbine à gaz (1) selon l'une des revendications 6 à 9, **caractérisée en ce que** la centrale à turbine à gaz (1) comprend un premier groupe d'agencements de chambres de combustion séquentielles (4) et un deuxième groupe d'agencements de chambres de combustion séquentielles (4), dans laquelle la conduite de combustible pour le premier combustible (12) est reliée aux premiers brûleurs (9) du premier groupe d'agencements de chambres de combustion séquentielles (4), et dans laquelle la conduite de combustible pour le deuxième combustible (13) est reliée aux premiers brûleurs (9) du deuxième groupe d'agencements de chambres de combustion séquentielles (4) pour un étagement, et/ou dans laquelle la conduite de combustible pour le premier combustible (12) est reliée aux deuxièmes chambres de combustion (14) du premier groupe d'agencements de chambres de combustion séquentielles (4), et dans laquelle la conduite de combustible pour le deuxième combustible (13) est reliée aux deuxièmes chambres de combustion (14) du deuxième groupe d'agencements de chambres de combustion séquentielles (4) pour un étagement.
